# EUROPEAN PATENT SPECIFICATION

(11) **EP 4 190 666 B1**
(45) Date of publication and mention of the grant of the patent: **02.04.2025**
(21) Application number: 21849749.3
(22) Date of filing: 10.02.2021
(51) Int. Cl.: B61F 7/00, B60B 37/00, B60B 35/00

(54) **AXLE FOR USE IN GAUGE-CHANGEABLE WHEEL SET, AND GAUGE-CHANGEABLE WHEEL SET**
ACHSE ZUR VERWENDUNG IN EINEM RADSATZ MIT VERÄNDERLICHER SPURWEITE UND RADSATZ MIT VERÄNDERLICHER SPURWEITE
ESSIEU DESTINÉ À ÊTRE UTILISÉ DANS UN ENSEMBLE DE ROUES À ÉCARTEMENT VARIABLE, ET ENSEMBLE DE ROUES À ÉCARTEMENT VARIABLE

(30) Priority: 28.07.2020 CN 202010737193
(43) Date of publication of application: 07.06.2023
(73) Proprietor: CRRC Qingdao Sifang Co., Ltd., Qingdao, Shandong 266111 (CN)
(72) Inventor: ZHANG, Zhenxian, Qingdao, Shandong 266111 (CN); WEI, Jiaqi, Qingdao, Shandong 266111 (CN); WANG, Xu, Qingdao, Shandong 266111 (CN); JIAO, Jinghai, Qingdao, Shandong 266111 (CN); HU, Haitao, Qingdao, Shandong 266111 (CN)
(74) Representative: Dilg, Haeusler, Schindelmann Patentanwaltsgesellschaft mbH
(86) International application number: PCT/CN2021/076526
(87) International publication number: WO 2022/021842

(56) References cited:
- EP-B1- 0 905 002
- CN-A- 108 407 845
- CN-A- 108 423 025
- CN-A- 109 532 922
- CN-A- 109 572 740
- CN-A- 111 137 319
- CN-A- 111 806 500
- CN-U- 207 157 219
- ES-A6- 2 021 919
- JP-A- H1 191 562
- KR-A- 20060 086 547

## Description

### CROSS-REFERENCE TO RELATED APPLICATION

The present application claims priority to Chinese application No. 202010737193.4 filed on July 28, 2020, entitled "Axle for Use in Gauge-Changeable Wheelset, and Gauge-Changeable Wheelset".

### FIELD OF TECHNOLOGY

The present application relates to the technical field of railway vehicle gauge changing, and in particular, to an axle for a gauge-changing wheelset and a gauge-changing wheelset.

### BACKGROUND

Transnational passenger and cargo transportation has grown rapidly in recent years. However, different rail gauges of various countries have seriously hindered the transnational rail transportation. In order to solve the problem that the different rail gauges of various countries seriously hinder the transnational railway transportation, a gauge-changing train is proposed, when the train runs on the railway of another country, a distance between wheels on an axle is changeable so as to adapt to the gauge of other countries' railways.

However, traditional wheel and axle have complex connection structure, and the gauge-changing operation has low reliability.

CN207157219U discloses a gauge conversion assembly applied to a gauge-changing bogie, including slider, retaining member and axle box, the slider is the tube -shape body, axial sliding connection between the lateral wall of the tube -shape body and the axle box, the lateral wall of slider is provided with two row at least locking grooves, the retaining member includes locking lever and locking piece, and the locking piece is located the axle box, connect in the upper portion of locking lever to with locking the groove mutually support, locking lever and axle box sliding connection, and stretch out to the axle box outside the lower part.

### SUMMARY

The present application is intended to address at least one of the technical problems in the prior art. The present application provides an axle for a gauge-changing wheelset having an ingenious structural design, which provides simple connection structure between the axle and the wheel, and highly reliable gauge-changing operation.

The present application further provides a gauge-changing wheelset.

According to an embodiment of an aspect of the present application, an axle for a gauge-changing wheelset is provided. A central through hole is provided along an axial direction of the axle, an outer circumference of the axle close to a middle portion thereof is provided with a section of an outer spline extending along the axial direction of the axle, an outer circumference of the axle is provided with two sections of first non-self-locking thread having opposite directions of rotation at both axial sides of the outer spline respectively, and an oblong hole radially penetrating through the axle is provided at the outer spline of the axle and the oblong hole has a longitudinal direction coinciding with the axial direction of the axle; and
at least one first raceway circumferentially disposed around the axle is provided at a position between one of the first non-self-locking threads and the outer spline of the axle.

According to an embodiment of the present application, the at least one first raceway comprises two first raceways, and the two first raceways are arranged side by side and disposed close to the outer spline.

According to an embodiment of the present application, each first raceway has a cross section of concave semicircle.

According to an embodiment of the present application, an annular flange is formed at a position of the axle where the first raceway is constructed, and the annular flange has an outer diameter larger than an outer diameter of the remaining part of the axle such that stop end surfaces are formed at both axial ends of the annular flange.

According to an embodiment of the present application, a distance between the outer spline and a first non-self-locking thread adjacent to the outer spline is equal to a distance between the annular flange and a first non-self-locking thread adjacent to the annular flange, and both of the distances are equal to half of the gauge to be changed.

According to an embodiment of the present application, the first non-self-locking thread is a trapezoidal thread.

According to an embodiment of the present application, the axle is configured to be a stepped axle with both ends each having a smaller diameter than that of a middle portion of the stepped axle, and two end portions of the stepped axle are configured to mount an axle-box body.

According to an embodiment of the present application, an intermediate portion of the stepped axle is provided with a sliding section between each first non-self-locking thread and an end of the intermediate portion of the stepped axle.

According to an embodiment of another aspect of the present application, a gauge-changing wheelset is provided, including an axle and a pair of wheels, the axle is the axle for a gauge-changing wheelset mentioned above;
the gauge-changing wheelset further including an outer sleeve and a pair of axle sleeves;
wherein the pair of wheels are mounted on the axle through the axle sleeves, each wheel is fastened on an outer circumference of a first end of each axle sleeve, and an inner circumference of the axle sleeve is provided with two sections of second non-self-locking threads that are matched to form a non-self-locking thread pair with the first non-self-locking thread;
an outer circumference of a second end of the axle sleeve is provided with an outer spline; and
the outer sleeve is sleeved outside the axle, an inner circumference of the outer sleeve is provided with a second raceway corresponding to the first raceway, the second raceway is provided with a rolling element mounting hole in snap-fit with the first raceway to form a rolling space in which a rolling element matched therewith is mounted through the rolling element mounting hole such that the outer sleeve is rotatably connected outside the axle, and an inner spline matched with the outer spline on the axle sleeve is provided on both axial sides of the second raceway inside the outer sleeve and located at predetermined distances from the second raceway.

According to an embodiment of the present application, the gauge-changing wheelset further includes a locking slip ring, a thrust pin, an elastic piece and a thrust rod;
the locking slip ring is slidably sleeved at the outer spline of the axle, and the locking slip ring is provided therein with an inner spline matched with the outer spline of the axle, and provided externally with an outer spline matched with the inner spline of the outer sleeve; an inner wall of the locking slip ring is radially provided with a pair of open slots having openings communicated with an end of the locking slip ring; the thrust pin passes through the oblong hole, and both ends of the thrust pin protrude from the oblong hole and both ends of the thrust pin protruding from the oblong hole are embedded inside the pair of the open slots by the openings of the open slots; the locking elastic piece is sleeved on the axle, having an end abutted against an outer wall of the first raceway, and the other end abutted against an end of the locking slip ring away from the open slot; and when the locking elastic piece is in a natural state, the outer spline of the locking slip ring is at least partially located in the inner spline of a corresponding side of the outer sleeve to lock the rotation of the outer sleeve; and
the thrust rod has an end penetrating through the central through hole of the axle and abutted against a side of the thrust pin on which the open slot is located and another end extending to an end portion of the axle.

According to an embodiment of the present application, the gauge-changing wheelset further includes an unlocking mechanism mounted on an end of the axle where the thrust rod is located; and
an axle-box body is mounted at each end of the axle located outside the pair of wheels, and the unlocking mechanism includes a mounting base and a pushing head penetrating axially through the mounting base. The mounting base is fixedly mounted outside the axle-box body and the pushing head is disposed opposite to the thrust rod.

According to an embodiment of the present application, the second non-self-locking thread has a length greater than the length of the first non-self-locking thread is equal to half of the gauge to be changed;
an inner circumference of the outer sleeve is provided with an annular boss at the second raceway, and after the outer sleeve is connected to the axle, a pair of mounting spaces for the axle sleeves are formed between the outer sleeve and the axle at both axial sides of the rolling space; and
the elastic piece is a locking spring.

One or more technical solutions in the embodiments of the present application mentioned above have at least one of the following technical effects.

For the axle for a gauge-changing wheelset according to an embodiment of the present application, a central through hole is provided along the axial direction of the axle, an outer circumference of the axle close to a middle portion thereof is provided with a section of an outer spline extending along an axial direction of the axle, an outer circumference of the axle is provided with two sections of first non-self-locking thread having opposite directions of rotation at both axial sides of the outer spline respectively, and an oblong hole radially penetrating through the axle is provided at the outer spline of the axle and the oblong hole has a longitudinal direction coinciding with the axial direction of the axle; and at least one first raceway circumferentially disposed around the axle is provided a position between one of the first non-self-locking threads and the outer spline of the axle; such that the axle has an ingenious structural design, which ensures simple connection structure between the axle and the wheel, and highly reliable gauge-changing operation.

For the gauge-changing wheelset according to the embodiment of the present application, by providing the axle for the gauge-changing wheelset mentioned above, no complex gauge-changing mechanisms need to be provided, which simplifies the structure of other matching components outside the axle, so that the gauge-changing wheelset can have simple overall structure, convenient mounting, and reliable gauge-changing operation.

The additional aspects and advantages of the present application will be partially given in the following description, and some thereof will be obvious from the following description, or be understood through the practice of the present application.

### BRIEF DESCRIPTION OF THE DRAWINGS

In order to more clearly illustrate technical solutions disclosed in the embodiments of the present application or the prior art, the drawings used in the descriptions of the embodiments or the prior art will be briefly described below. Obviously, the drawings in the following description are only certain embodiments of the present application, and other drawings can be obtained according to the drawings without any creative work for those skilled in the art.
FIG. 1 is a front schematic structural diagram showing an axle for a gauge-changing wheelset according to an embodiment of the present application;
FIG. 2 is a perspective schematic structural diagram showing an axle sleeve of a gauge-changing wheelset according to an embodiment of the present application;
FIG. 3 is an axial sectional schematic structural diagram of a gauge-changing wheelset according to an embodiment of the present application; and
FIG. 4 is an axial sectional schematic structural diagram of another gauge-changing wheelset according to an embodiment of the present application;

Reference numerals:
10. axle; 11. outer spline of the axle; 12. oblong hole; 13. first raceway; 14. first non-self-locking thread; 15. central through hole; 20. axle sleeve; 21. second non-self-locking thread; 22. outer spline of axle sleeve; 30. wheel; 40. outer sleeve; 41. second raceway; 50. axle-box body; 60. locking slip ring; 70. locking spring; 80. thrust pin; 90. thrust rod; 100. unlocking mechanism; 110. sliding bearing; 120. gear box; 130. brake disc.

### DETAILED DESCRIPTION

Embodiments of the present application are further described in detail below in conjunction with the drawings and embodiments. The following embodiments are intended to illustrate the present application, but are not intended to limit the scope of the present application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it is to be noted that unless explicitly stated and defined otherwise, the terms "connected with", and "connected" shall be understood broadly, for example, it may be either fixedly connected or detachably connected, or can be integrated; it may be mechanically connected, or electrically connected; it may be directly connected, or indirectly connected through an intermediate medium. The specific meanings of the terms above in embodiments of the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. Also, the first feature being located "on", "above" and "on top of" the second feature may mean that the first feature is directly on or above the second feature, or it simply means that the level of the first feature is higher than the second feature. The first feature being located "under", "below" and "on bottom of" the second feature may mean that the first feature is directly under or below the second feature, or it simply means that the level of the first feature is lower than the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present application. In this specification, the schematic expressions of the above terms do not necessarily refer to the same embodiment or example. Also, the described specific features, structures, materials or characteristics can be combined in any one or more embodiments or examples in a suitable manner. In addition, those skilled in the art may integrate and combine the different embodiments or examples and the features of the different embodiments or examples described in this specification without contradicting each other.

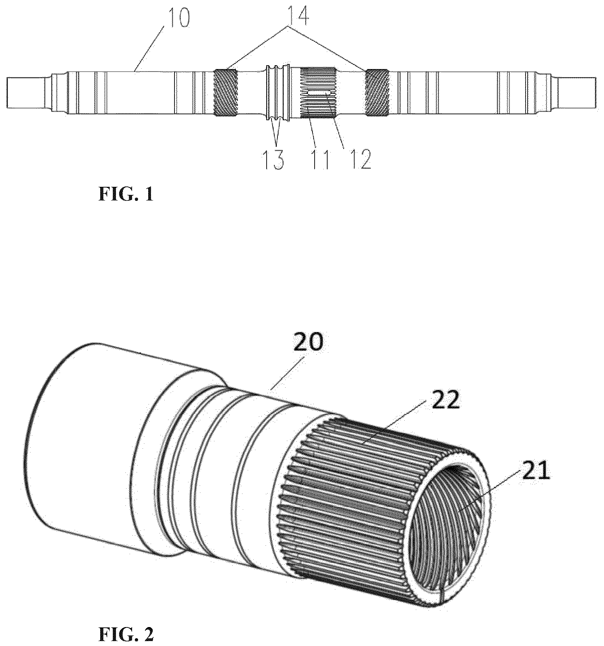

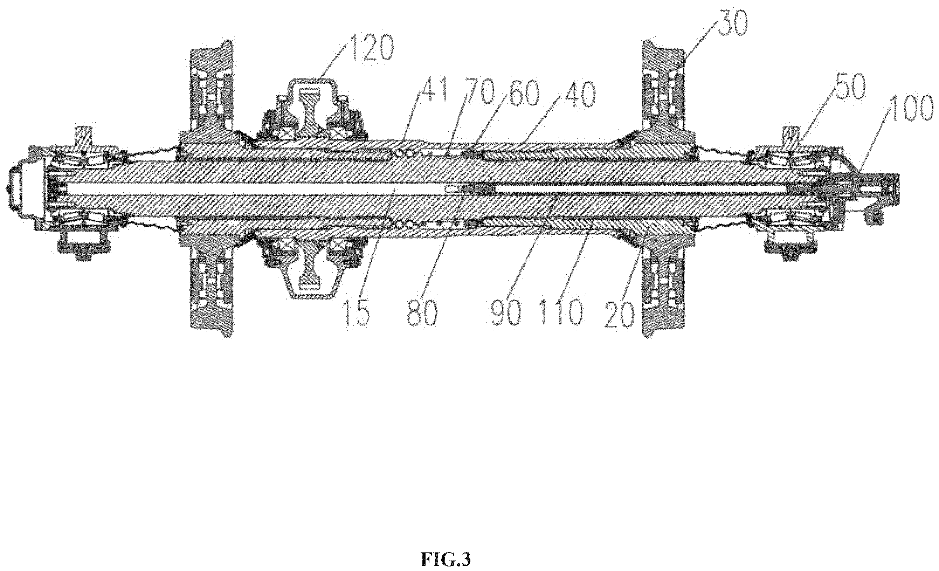

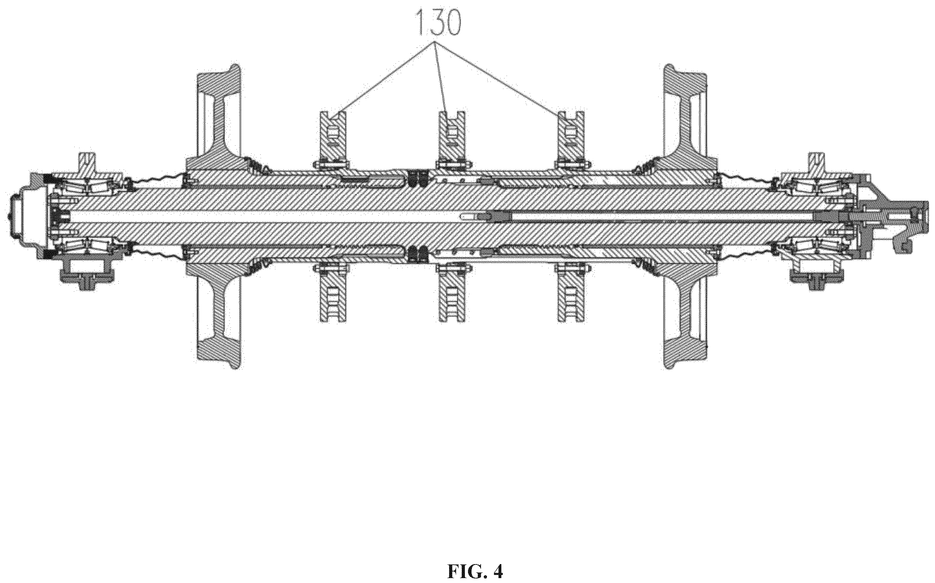

As shown in FIGS. 1 to 4, an embodiment of the present application provides an axle for a gauge-changing wheelset and a gauge-changing wheelset.

In order to introduce the technical solution of the present application clearly, the axle for a gauge-changing wheelset is described by combining the gauge-changing wheelset.

Referring to FIGS. 1 to 4, the gauge-changing wheelset includes an axle for a gauge-changing wheelset, an outer sleeve 40, a pair of axle sleeves 20 and a pair of wheels 30.

Specifically, as shown in FIG. 1, the axle 10 is provided with a central through hole 15 along the axial direction thereof, an outer circumference of the axle 10 close to a middle portion thereof is provided with a section of outer spline extending in the axial direction of the axle 10, and both axial sides of the outer spline at the outer circumference thereof are provided with a pair of first non-self-locking threads 14 having opposite direction of rotation, that is, the axle 10 is further provided with two sections of first non-self-locking thread 14 having opposite direction of rotation disposed at both axial sides of the outer spline. In an embodiment, there is a spacing between each section of first non-self-locking thread 14 and the outer spline. The outer spline of the axle 10 is provided with an oblong hole 12 radially extending through the outer spline. That is, the oblong hole 12 and the outer spline are overlapped, and the oblong hole 12 has a longitudinal direction coinciding with the axial direction of the axle, that is, the oblong hole 12 has a longitudinal direction consistent with the extending direction of the outer spline.

In the present embodiment, the oblong hole 12 has a length slightly less than the length of the outer spline. In addition, the central through hole 15 provided on the axle 10 is beneficial to reduce the weight of the axle.

Further, a part of the axle 20 between one of the first non-self-locking thread 14 and the outer spline is provided with at least one first raceway 13 circumferentially disposed around the axle 10 and the first raceway 13 is disposed close to the outer spline.

In the present embodiment, the first raceway 13 has a cross section of concave semicircle.

Specifically, the pair of wheels 30 are mounted at both axial ends of the axle 10 through the axle sleeves 20 and fastened outside first ends of the axle sleeves 20. For example, the wheels 30 may be press-fitted at the outer circumference of a first end of the axle sleeve 20 so that they are in interference fit with each other. The inner circumference of a second end of the axle sleeve 20 is provided with a second non-self-locking thread 21 that forms a non-self-locking thread pair together with the first non-self-locking thread 14. The second non-self-locking thread 21 has a length greater than the length of the first non-self-locking thread 14, and the length difference is equal to half of the gauge to be changed, so that both wheels 30 can move half of the gauge to be changed relative to the axle 10 during the rotation by following respective axle sleeves 20 so that a sum of the distances both wheels 30 move is equal to the distance of the desired gauge to be changed.

The outer sleeve 40 is sleeved outside the axle 10, an inner circumference of the outer sleeve 40 is provided with a second raceway 41 corresponding to the first raceway 13 having the same size and shape as those of the first raceway 13. The second raceway 41 is provided with a rolling element mounting hole and in snap fit with the first raceway 13 to form a circular rolling space in which a rolling element is mounted through the rolling element mounting hole. The rolling element, which may be a rolling ball filled with the rolling space, has an outer diameter matched with an inner diameter of the rolling space. By connecting the outer sleeve 40 with the axle 10 through the rolling element, the outer sleeve 40 is rotatably connected outside the axle 10, in other words, the outer sleeve 40 has rotational degree of freedom, but is restricted the movement degree of freedom, that is, the outer sleeve 40 can rotate relative to the axle 10 but cannot move.

The outer circumference of the second end of the axle sleeve 20 is provided with outer splines. After being mounted, the second end of the axle sleeve 20 is located inside the wheel 30 and faces the outer sleeve 40; inner splines matched with the outer splines on the axle sleeve 20 are respectively disposed on an inner circumference of the outer sleeve at positions on both axial sides of the second raceway 42 and at a predetermined interval from the second raceway 41. The axle sleeve 20 and the outer sleeve 40 are connected through the inner splines and the outer splines such that the axle sleeve 20 can rotate together with the outer sleeve 40, or the axle sleeve 20 can move axially relative to the outer sleeve 40.

According to an embodiment of the present application, an annular flange is formed at a position of the axle 10 where the first raceway 13 is constructed, and the annular flange has an outer diameter larger than the outer diameter of the remaining part of the axle 10 such that stop end surfaces are formed at both axial ends of the annular flange.

Specifically, both ends of the axle 10 beyond the pair of wheels 30 are respectively mounted with axle-box bodies 50.

According to an embodiment of the present application, the gauge-changing wheelset further includes a locking slip ring 60, a thrust pin 80, an elastic piece and a thrust rod 90.

In an embodiment, the locking slip ring 60 is slidably sleeved at the outer spline 11 of the axle, and the locking slip ring is provided therein with an inner spline matched with the outer spline 11 of the axle, and provided externally with an outer spline matched with the inner spline of the outer sleeve 40. An inner wall of the locking slip ring 60 is radially provided with a pair of open slots having openings communicated with an end of the locking slip ring 60. The thrust pin 80 passes through the oblong hole 12, and both ends of the thrust pin 80 protrude from the oblong hole 12 and both ends of the thrust pin 80 protruding from the oblong hole 12 are embedded inside the pair of the open slots by the openings of the open slots. The thrust pin 80 has a length same as a distance between the top walls of a pair of open slots, and both ends of the thrust pin 80 abut against the top walls of the open slot. In addition, the thrust pin 80 has a width consistent with widths of the open slots such that the thrust pin 80 and the locking slip ring 60 have reliable connection.

In order to facilitate the axial movement of the thrust pin 80 along the oblong hole 12, the thrust pin 80 has a width smaller than the length of the oblong hole 12, and a thickness less than or equal to the width of the oblong hole 12. In addition, the width of the locking slip ring 60 should not be too wide to ensure that the locking slip ring 60 can have an amount of movement in the space between the second raceway 41 of the outer sleeve 40 and the inner spline.

The elastic piece, for example, an elastic spring 70, is sleeved on the axle, and has an end abutted against an outer wall, i.e., a stop end surface of the first raceway 13, and the other end abutted against an end of the locking slip ring 60 away from the open slot. When the elastic piece is in a natural state, the outer spline outside the locking slip ring 60 are at least partially located in the inner spline of a corresponding side of the outer sleeve 40 to lock the rotation of the outer sleeve 40 for fixing the outer sleeve relative to the axle 10.

The thrust rod 90 has an end penetrating the central through hole 15 of the axle 10 and abutted against a side of the thrust pin 80 where an open slot is located. For example, the thrust pin 80 may be provided with a connecting shaft extending to a side, and the thrust rod 90 is designed to be hollow and sleeved on the connecting shaft of the thrust pin 80 to fix the two. The connecting shaft can also be provided with an outer thread, and an inner hole at an end of the thrust rod 90 is provided with an inner thread for forming a threaded connection with the outer thread. The thrust rod 90 has the other end extending to the end of the central through hole 15. Preferably, the outer end of the thrust rod 90 is substantially flush with the end of the central through hole 15. The axle box body 50 may be lifted by an unlocking rail and thus the wheels 30 are unloaded, a trust is applied to the thrust pin 80 by the thrust rod 90 to drive the locking slip ring 60 to compress the elastic piece on the axle 10 to move away from the inner spline of the outer sleeve 40 to disengage from the inner spline of the outer sleeve 40 key and thus the rotational degree of freedom of the outer sleeve 40 is unlocked. In this case, when the wheels 30 are pushed, since the axle sleeve 20 is connected with the axle 10 through the non-self-locking thread pair, the wheels 30 and the axle sleeve 20 will rotate together around the axle 10, the second non-self-locking thread 21 of the axle sleeve 20 moves along the first non-self-locking thread 14 of the axle 10 during the rotation, so that the wheel 30 moves along with the axle sleeve 20 during the rotation. When the pair of wheels 30 is pushed inward or outward at the same time after the wheels 30 are unloaded, due to the non-self-locking thread pair having opposite directions of rotation, the pair of wheels 30 may move closer to each other or away from each other when they rotate in the same direction until they move to a set gauge-changing position, so as to change the gauge.

After the gauge is changed, the thrust of the thrust rod 90 on the thrust pin 80 is removed, and the thrust pin 80 will follow the slip ring 60 to return to its original position under the elastic reset action of the locking elastic piece, that is, the outer splines of the slip ring 60 are re-inserted into the outer splines of the outer sleeve 40 to lock the rotational degree of freedom of the outer sleeve 40. In this case, the axle sleeve 20 and the outer sleeve 40 cannot rotate relative to the axle 10, the axle sleeve 20 and the outer sleeve 40 can only rotate together with the axle 10, that is, the axle sleeve 20 and the outer sleeve 40 are locked on the axle 10.

The gauge-changing wheelset according to the embodiment has convenient and reliable gauge-changing operation, and simple overall structure.

In an embodiment, the first non-self-locking thread 14 is a trapezoidal thread, and correspondingly, the second non-self-locking thread 21 is a trapezoidal thread matching the trapezoidal thread of the first non-self-locking thread 14, resulting in reliable performance.

It should be noted that the elastic piece may also be other elastic sleeves with certain elasticity.

In order to directly apply a thrust to the thrust rod 90 by means of an external force when changing gauge, according to an embodiment of the present application, an unlocking mechanism 100 is further included, and the unlocking mechanism 100 is installed at an end of the axle 10 where the thrust rod 90 is located, that is, the unlocking mechanism 100 only needs to be mounted on an end of the axle 10.

Specifically, the unlocking mechanism 100 includes a mounting base and a pushing head penetrating axially through the mounting base, the mounting base is fixedly mounted outside the axle box body 50, the pushing head and the thrust rod 90 are disposed opposite to each other, or may be arranged coaxially, and a gap can be reserved between the pushing head and the thrust rod 90. When an axial thrust is applied from the side wall of the ground gauge-changing facility to the pushing head, the pushing head pushes the thrust rod 90 for unlocking, that is, pushes the thrust pin 80 to drive the locking slip ring 60 to move such that outer splines outside the locking slip ring 60 are disengaged from the inner splines of the outer sleeve 40, and the unlocking is completed.

After the gauge is changed, the thrust pin 80 recovers and pushes out the thrust rod 90 under the action of the restoring force of the locking spring 70, and pushes out of the pushing head by the thrust rod 90, then the gauge-changing process ends, the wheelset is completely locked, and the normal operation state is re-entered.

According to an embodiment of the present application, an inner circumference of the outer sleeve 40 is provided with an annular boss at the second raceway 41. After the outer sleeve 40 and the axle 10 are connected by a rolling ball, a pair of mounting spaces for the axle sleeves 20 are formed between the outer sleeve 40 and the axle 10 at both axial sides of the rolling space. The axle sleeve 20 firstly slides from each end of the axle 10 respectively and sleeved on the axle 10 and then is inserted into the outer sleeve 40; the outer spline 22 of the axle sleeve moves axially relative to the inner spline of the outer sleeve 40 until the second non-self-locking thread 21 of the axle 20 is in contact with the first non-self-locking thread 14 of the axle 10, the axle 20 is rotated such that the second non-self-locking thread 21 is screwed into the first non-self-locking thread 14.

For a gauge-changing wheelset for motor vehicle, a gearbox 120 is mounted outside the outer sleeve 40, and for a gauge-changing wheelset for trailer, a plurality of brake discs 130 are mounted outside the outer sleeve 40.

In order to improve the reliability of the connection between the outer sleeve 40 and the axle 10, according to an embodiment of the present application, there are two first raceways 13 arranged side by side.

Further, the axle 10 is divided into a main half shaft and an auxiliary half shaft by each first raceway 13, and the axle 10 provided with the outer splines and the oblong hole 12 is the main half shaft. The locking slip ring 60 is mounted on the main half shaft, and the open slot of the locking slip ring 60 faces towards the free end of the main half shaft, and the locking spring 70 is mounted between the stop end surface of the annular flange and the locking slip ring 60.

For optimizing the structure, the first raceway 13 is disposed close to the outer spline 11 of the axle 10.

According to an embodiment of the present application, a distance between the outer splines 11 of the axle and the adjacent first non-self-locking threads 14 is equal to a distance between the annular flange and the adjacent first non-self-locking threads 14, and both of the distances are equal to half of the changing gauge and the distance is a movement space of the second non-self-locking thread 21 of the axle sleeve 20.

According to an embodiment of the present application, the axle 10 is configured to be a stepped axle with both ends each having a smaller diameter than that of a middle portion of the stepped axle, so that both end portions of the stepped axle are used to be provided with the axle-box body 50.

According to an embodiment of the present application, an intermediate portion of the stepped axle is provided with a sliding section between each first non-self-locking thread 14 and an end of the intermediate portion of the stepped axle, so that the sliding bearings 110 of the axle sleeve 20 slides relative to the axle 10 through a sliding bearing 110.

According to an embodiment, the gauge-changing process is shown as follows.
1. unlocking stage: the axle-box body 50 is gradually lifted by an unlocking rail, so that the wheel 30 is unloaded; after the unlocking mechanism 100 is triggered, the pushing head is pushed inward to contact the thrust rod 90, and the thrust pin 80 and the locking slip ring 60 are pushed to move inward and compresses the locking spring 70 until the locking slip ring 60 is out of contact with the inner splines of the outer sleeve 40, and the rotational constraint between the axle 10 and the axle sleeve 20 is released.
2. gauge-changing stage: after entering the gauge-changing stage, the wheels 30 move inward (or outward) under the action of the gauge-changing lateral force, and the wheels 30 and the axle sleeve 20 rotate together around the non-self-locking thread pair to reach a target gauge.
3. locking stage: after entering the locking stage, the unlocking rail gradually lowers and no longer plays supporting role, and the locking slip ring 60 moves outward under the thrust of the locking spring 70 and is inserted into the inner spline of the outer sleeve 40 to be re-locked; the thrust pin 80 recovers and pushes out the thrust rod 90 under the action of the restoring force of the locking spring 70, and pushes out of the pushing head by the thrust rod 90, then the gauge-changing process ends, the wheelset is completely locked, and the normal operation state is re-entered.

## Claims

1. An axle for a gauge-changing wheelset, wherein a central through hole (15) is provided along an axial direction of the axle (10), an outer circumference of the axle (10) close to a middle portion thereof is provided with a section of an outer spline (11) extending along the axial direction of the axle (10),
**characterized in that**,
an outer circumference of the axle (10) is provided with two sections of first non-self-locking thread (14) having opposite directions of rotation at both axial sides of the outer spline (11) respectively, and an oblong hole (12) radially penetrating through the axle (10) is provided at the outer spline (11) of the axle (10) and the oblong hole (12) has a longitudinal direction coinciding with the axial direction of the axle (10); and
at least one first raceway (13) circumferentially disposed around the axle (10) is provided at a position between one of the first non-self-locking threads (14) and the outer spline of the axle (10).

2. The axle for a gauge-changing wheelset of claim 1, wherein the at least one first raceway (13) comprises two first raceways, and the two first raceways (13) are arranged side by side and disposed close to the outer spline (11).

3. The axle for a gauge-changing wheelset of claim 2, wherein each first raceway (13) has a cross section of concave semicircle.

4. The axle for a gauge-changing wheelset of claim 1, wherein an annular flange is formed at a position of the axle (10) where the first raceway (13) is constructed, and the annular flange has an outer diameter larger than an outer diameter of remaining part of the axle (10) such that stop end surfaces are formed at both axial ends of the annular flange.

5. The axle for a gauge-changing wheelset of claim 4, wherein a distance between the outer spline (11) and a first non-self-locking thread (14) adjacent to the outer spline is equal to a distance between the annular flange and a first non-self-locking thread (14) adjacent to the annular flange, and both of the distances are equal to half of the gauge to be changed.

6. The axle for a gauge-changing wheelset of any one of claims 1 to 5, wherein the first non-self-locking thread (14) is a trapezoidal thread.

7. The axle for a gauge-changing wheelset of any one of claims 1 to 5, wherein the axle (10) is configured to be a stepped axle with both ends each having a smaller diameter than that of a middle portion of the stepped axle, and two end portions of the stepped axle are configured to mount an axle-box body.

8. The axle for a gauge-changing wheelset of claim 7, wherein an intermediate portion of the stepped axle is provided with a sliding section between each first non-self-locking thread (14) and an end of the intermediate portion of the stepped axle.

9. A gauge-changing wheelset, comprising a pair of wheels (30) and an axle (10) for a gauge-changing wheelset of any one of claims 1 to 8,
**characterized in that**,
the gauge-changing wheelset further comprises an outer sleeve (40) and a pair of axle sleeves (20);
the pair of wheels (30) are mounted on the axle (10) through the axle sleeves (20), each wheel (30) is fastened on an outer circumference of a first end of each axle sleeve (20), and an inner circumference of the axle sleeve (20) is provided with two sections of second non-self-locking threads (21) that are matched to form a non-self-locking thread pair with the first non-self-locking thread (14);
an outer circumference of a second end of the axle sleeve (20) is provided with an outer spline (22); and
the outer sleeve (40) is sleeved outside the axle (10), an inner circumference of the outer sleeve (40) is provided with a second raceway (41) corresponding to the first raceway (13), the second raceway (41) is provided with a rolling element mounting hole and in snap-fit with the first raceway (13) to form a rolling space in which a rolling element matched therewith is mounted through the rolling element mounting hole, such that the outer sleeve (40) is rotatably connected outside the axle (10), and an inner spline matched with the outer spline (22) on the axle sleeve (20) is provided on both axial sides of the second raceway (41) inside the outer sleeve (40) and located at predetermined distances from the second raceway (41).

10. The gauge-changing wheelset of claim 9, further comprising a locking slip ring (60), a thrust pin (80), an elastic piece and a thrust rod (90);
wherein the locking slip ring (60) is slidably sleeved at the outer spline (11) of the axle (10), and the locking slip ring (60) is provided therein with an inner spline matched with the outer spline of the axle (10), and provided externally with an outer spline matched with the inner spline of the outer sleeve; an inner wall of the locking slip ring (60) is radially provided with a pair of open slots having openings communicated with an end of the locking slip ring (60); the thrust pin (80) passes through the oblong hole, and both ends of the thrust pin protrude from the oblong hole (12) and both ends of the thrust pin (80) protruding from the oblong hole are embedded inside the pair of the open slots by the opening of the open slots(12); the locking elastic piece is sleeved on the axle (10), having an end abutted against an outer wall of the first raceway (13), and the other end abutted against an end of the locking slip ring (60) away from the open slot; and when the locking elastic piece is in a natural state, the outer spline of the locking slip ring (60) is at least partially located in the inner spline of a corresponding side of the outer sleeve (40) to lock the rotation of the outer sleeve (40); and
the thrust rod (90) has an end penetrating through the central through hole of the axle (10) and abutted against a side of the thrust pin (80) on which the open slot is located and the other end extending to an end portion of the axle (10).

11. The gauge-changing wheelset of claim 10, further comprising an unlocking mechanism (100) mounted on an end of the axle (10) where the thrust rod (90) is located; and
an axle-box body (50) is mounted at each end of the axle (10) located outside the pair of wheels, and the unlocking mechanism (100) comprises a mounting base and a pushing head penetrating axially through the mounting base; the mounting base is fixedly mounted outside the axle-box body (50) and the pushing head is disposed opposite to the thrust rod (90).

12. The gauge-changing wheelset of claim 10, wherein the second non-self-locking thread (21) has a length greater than the length of the first non-self-locking thread (14) and equal to half of the gauge to be changed;
an inner circumference of the outer sleeve (40) is provided with an annular boss at the second raceway (41), and after the outer sleeve (40) is connected to the axle (10), a pair of mounting spaces for the axle sleeves (20) are formed between the outer sleeve (40) and the axle (10) at both axial sides of the rolling space; and
the elastic piece is a locking spring (70).

## Patentansprüche

1. Eine Achse für einen Spurwechsel-Radsatz, wobei eine zentrale Durchgangsöffnung (15) entlang einer axialen Richtung der Achse (10) vorgesehen ist, ein äußerer Umfang der Achse (10) nahe einem mittleren Abschnitt davon mit einer Sektion einer äußeren Keilverzahnung (11) versehen ist, die sich entlang der axialen Richtung der Achse (10) erstreckt,
**dadurch gekennzeichnet, dass**
ein äußerer Umfang der Achse (10) mit zwei Sektionen eines ersten nicht selbstverriegelnden Gewindes (14) versehen ist, die jeweils entgegengesetzte Drehrichtungen an beiden axialen Seiten der äußeren Keilverzahnung (11) haben, und ein Langloch (12), das die Achse (10) radial durchdringt, an der äußeren Keilverzahnung (11) der Achse (10) vorgesehen ist, und das Langloch (12) eine Längsrichtung hat, die mit der axialen Richtung der Achse (10) zusammenfällt; und
mindestens eine erste Laufbahn (13), die in Umfangsrichtung um die Achse (10) angeordnet ist, an einer Position zwischen einem der ersten nicht selbstverriegelnden Gewinde (14) und der äußeren Keilverzahnung der Achse (10) vorgesehen ist.

2. Die Achse für einen Spurwechsel-Radsatz gemäß Anspruch 1, wobei die mindestens eine erste Laufbahn (13) zwei erste Laufbahnen aufweist, und die zwei ersten Laufbahnen (13) nebeneinander angeordnet sind und nahe der äußeren Keilverzahnung (11) angeordnet sind.

3. Die Achse für einen Spurwechsel-Radsatz gemäß Anspruch 2, wobei jede erste Laufbahn (13) eine Sektion eines konkaven Halbkreises hat.

4. Die Achse für einen Spurwechsel-Radsatz gemäß Anspruch 1, wobei ein ringförmiger Flansch an einer Position der Achse (10) ausgebildet ist, wo die erste Laufbahn (13) konstruiert ist, und der ringförmige Flansch einen Außendurchmesser hat, der größer ist als ein Außendurchmesser eines verbleibenden Teils der Achse (10), so dass Anschlagendflächen an beiden axialen Enden des ringförmigen Flansches gebildet sind.

5. Die Achse für einen Spurwechsel-Radsatz gemäß Anspruch 4, wobei ein Abstand zwischen der äußeren Keilverzahnung (11) und einem ersten nicht selbstverriegelnden Gewinde (14) benachbart zu der äußeren Keilverzahnung gleich einem Abstand zwischen dem ringförmigen Flansch und einem ersten nicht selbstverriegelnden Gewinde (14) benachbart zu dem ringförmigen Flansch ist, und beide Abstände gleich der Hälfte des zu ändernden Spurmaßes sind.

6. Die Achse für einen Spurwechsel-Radsatz gemäß einem der Ansprüche 1 bis 5, wobei das erste nicht selbstverriegelnde Gewinde (14) ein Trapezgewinde ist.

7. Die Achse für einen Spurwechsel-Radsatz gemäß einem der Ansprüche 1 bis 5, wobei die Achse (10) so konfiguriert ist, dass sie eine gestufte Achse ist, wobei beide Enden jeweils einen kleineren Durchmesser haben als der eines mittleren Abschnitts der gestuften Achse, und zwei Endabschnitte der gestuften Achse konfiguriert sind, um einen Achskastenkörper zu montieren.

8. Die Achse für einen Spurwechsel-Radsatz gemäß Anspruch 7, wobei ein Zwischenabschnitt der gestuften Achse mit einer Gleitsektion zwischen jedem ersten nicht selbstverriegelnden Gewinde (14) und einem Ende des Zwischenabschnitts der gestuften Achse versehen ist.

9. Ein Spurwechsel-Radsatz, aufweisend ein Paar Räder (30) und eine Achse (10) für einen Spurwechsel-Radsatz gemäß einem der Ansprüche 1 bis 8,
**dadurch gekennzeichnet, dass**
der Spurwechsel-Radsatz ferner eine äußere Hülse (40) und ein Paar Achshülsen (20) aufweist;
das Paar Räder (30) an der Achse (10) durch die Achshülsen (20) montiert ist, jedes Rad (30) an einem äußeren Umfang eines ersten Endes jeder Achshülse (20) befestigt ist, und ein innerer Umfang der Achshülse (20) mit zwei Sektionen von zweiten nicht selbstverriegelnden Gewinden (21) versehen ist, die angepasst sind, um ein nicht selbstverriegelndes Gewindepaar mit dem ersten nicht selbstverriegelnden Gewinde (14) zu bilden;
ein äußerer Umfang eines zweiten Endes der Achshülse (20) mit einer äußeren Keilverzahnung (22) versehen ist; und
die äußere Hülse (40) außerhalb der Achse (10) hülsenartig angeordnet ist, ein innerer Umfang der äußeren Hülse (40) mit einer zweiten Laufbahn (41) versehen ist, die der ersten Laufbahn (13) entspricht, die zweite Laufbahn (41) mit einer Rollelement-Montageöffnung versehen ist und in Schnappverbindung mit der ersten Laufbahn (13) steht, um einen Rollraum zu bilden, in dem ein damit angepasstes Rollelement durch die Rollelement-Montageöffnung montiert ist, so dass die äußere Hülse (40) drehbar außerhalb der Achse (10) verbunden ist, und eine innere Keilverzahnung, die mit der äußeren Keilverzahnung (22) an der Achshülse (20) angepasst ist, an beiden axialen Seiten der zweiten Laufbahn (41) innerhalb der äußeren Hülse (40) vorgesehen ist und in vorbestimmten Abständen von der zweiten Laufbahn (41) angeordnet ist.

10. Der Spurwechsel-Radsatz gemäß Anspruch 9, ferner aufweisend einen Verriegelungsgleitring (60), einen Druckstift (80), ein elastisches Stück und eine Druckstange (90);
wobei der Verriegelungsgleitring (60) gleitend an der äußeren Keilverzahnung (11) der Achse (10) hülsenartig angeordnet ist, und der Verriegelungsgleitring (60) darin mit einer inneren Keilverzahnung versehen ist, die mit der äußeren Keilverzahnung der Achse (10) angepasst ist, und außen mit einer äußeren Keilverzahnung versehen ist, die mit der inneren Keilverzahnung der äußeren Hülse angepasst ist; eine innere Wand des Verriegelungsgleitrings (60) radial mit einem Paar offener Schlitze versehen ist, die Öffnungen haben, die mit einem Ende des Verriegelungsgleitrings (60) in Verbindung stehen; der Druckstift (80) durch das Langloch hindurchgeht, und beide Enden des Druckstifts aus dem Langloch (12) hervorstehen und beide Enden des Druckstifts (80), die aus dem Langloch hervorstehen, innerhalb des Paares der offenen Schlitze durch die Öffnung der offenen Schlitze (12) eingebettet sind; das verriegelnde elastische Stück an der Achse (10) hülsenartig angeordnet ist, wobei ein Ende an einer äußeren Wand der ersten Laufbahn (13) anliegt, und das andere Ende an einem Ende des Verriegelungsgleitrings (60), das von dem offenen Schlitz entfernt ist, anliegt; und wenn sich das verriegelnde elastische Stück in einem natürlichen Zustand befindet, die äußere Keilverzahnung des Verriegelungsgleitrings (60) mindestens teilweise in der inneren Keilverzahnung einer entsprechenden Seite der äußeren Hülse (40) angeordnet ist, um die Drehung der äußeren Hülse (40) zu verriegeln; und
die Druckstange (90) ein Ende hat, das durch die zentrale Durchgangsöffnung der Achse (10) hindurchgeht und an einer Seite des Druckstifts (80) anliegt, an der der offene Schlitz angeordnet ist, und das andere Ende sich zu einem Endabschnitt der Achse (10) erstreckt.

11. Der Spurwechsel-Radsatz gemäß Anspruch 10, ferner aufweisend einen Entriegelungsmechanismus (100), der an einem Ende der Achse (10) montiert ist, wo die Druckstange (90) angeordnet ist; und
ein Achskastenkörper (50) an jedem Ende der Achse (10) montiert ist, das außerhalb des Paares Räder angeordnet ist, und der Entriegelungsmechanismus (100) eine Montagebasis und einen Druckkopf aufweist, der die Montagebasis axial durchdringt; die Montagebasis fest außerhalb des Achskastenkörpers (50) montiert ist und der Druckkopf gegenüber der Druckstange (90) angeordnet ist.

12. Der Spurwechsel-Radsatz gemäß Anspruch 10, wobei das zweite nicht selbstverriegelnde Gewinde (21) eine Länge hat, die größer als die Länge des ersten nicht selbstverriegelnden Gewindes (14) und gleich der Hälfte des zu ändernden Spurmaßes ist;
ein innerer Umfang der äußeren Hülse (40) mit einem ringförmigen Vorsprung an der zweiten Laufbahn (41) versehen ist, und nachdem die äußere Hülse (40) mit der Achse (10) verbunden ist, ein Paar Montageräume für die Achshülsen (20) zwischen der äußeren Hülse (40) und der Achse (10) an beiden axialen Seiten des Rollraums gebildet sind; und
das elastische Stück eine Verriegelungsfeder (70) ist.

## Revendications

1. Essieu pour un essieu monté à écartement variable, dans lequel un trou traversant central (15) est prévu le long d'une direction axiale de l'essieu (10), une circonférence extérieure de l'essieu (10) à proximité d'une partie médiane de celui-ci est pourvue d'une section d'une cannelure extérieure (11) s'étendant le long de la direction axiale de l'essieu (10),
**caractérisé en ce que**,
une circonférence extérieure de l'essieu (10) est pourvue de deux sections de premier filet non autobloquant (14) présentant des directions de rotation opposés au niveau des deux côtés axiaux de la cannelure extérieure (11), respectivement, et un trou oblong (12) pénétrant radialement à travers l'essieu (10) est prévu au niveau de la cannelure extérieure (11) de l'essieu (10), et le trou oblong (12) présente une direction longitudinale coïncidant avec la direction axiale de l'essieu (10) ; et
au moins un premier chemin de roulement (13) disposé circonférentiellement autour de l'essieu (10) est prévu dans une position entre l'un des premiers filets non autobloquants (14) et la cannelure extérieure de l'essieu (10).

2. Essieu pour un essieu à écartement variable selon la revendication 1, dans lequel le au moins un premier chemin de roulement (13) comprend deux premiers chemins de roulement, et les deux premiers chemins de roulement (13) sont agencés côte à côte et disposés à proximité de la cannelure extérieure (11).

3. Essieu pour un essieu monté à écartement variable selon la revendication 2, dans lequel chaque premier chemin de roulement (13) présente une section transversale en demi-cercle concave.

4. Essieu pour un essieu monté à écartement variable selon la revendication 1, dans lequel une bride annulaire est formée dans une position de l'essieu (10) où le premier chemin de roulement (13) est construit, et la bride annulaire présente un diamètre extérieur plus grand qu'un diamètre extérieur d'une partie restante de l'essieu (10) de sorte que des surfaces d'extrémité d'arrêt sont formées aux deux extrémités axiales de la bride annulaire.

5. Essieu pour un essieu monté à écartement variable selon la revendication 4, dans lequel une distance entre la cannelure extérieure (11) et un premier filet non autobloquant (14) adjacent à la cannelure extérieure est égale à une distance entre la bride annulaire et un premier filet non autobloquant (14) adjacent à la bride annulaire, et les deux distances sont égales à la moitié de l'écartement à changer.

6. Essieu pour un essieu monté à écartement variable selon l'une quelconque des revendications 1 à 5, dans lequel le premier filet non autobloquant (14) est un filet trapézoïdal.

7. Essieu pour un essieu monté à écartement variable selon l'une quelconque des revendications 1 à 5, dans lequel l'essieu (10) est configuré pour être un essieu étagé avec les deux extrémités présentant chacune un diamètre plus petit que celui d'une partie médiane de l'essieu étagé, et deux parties d'extrémité de l'essieu étagé sont configurées pour monter un corps de boîte d'essieu.

8. Essieu pour un essieu monté à écartement variable selon la revendication 7, dans lequel une partie intermédiaire de l'essieu étagé est pourvue d'une section coulissante entre chaque premier filet non autobloquant (14) et une extrémité de la partie intermédiaire de l'essieu étagé.

9. Essieu monté à écartement variable, comprenant une paire de roues (30) et un essieu (10) pour un essieu monté à écartement variable selon l'une quelconque des revendications 1 à 8,
**caractérisé en ce que**,
l'essieu monté à écartement variable comprend en outre un manchon extérieur (40) et une paire de manchons d'essieu (20) ;
la paire de roues (30) est montée sur l'essieu (10) via les manchons d'essieu (20), chaque roue (30) est fixée sur une circonférence extérieure d'une première extrémité de chaque manchon d'essieu (20), et une circonférence intérieure du manchon d'essieu (20) est pourvue de deux sections de seconds filets non autobloquants (21) qui sont appariées pour former une paire de filets non autobloquants avec le premier filet non autobloquant (14) ;
une circonférence extérieure d'une seconde extrémité du manchon d'essieu (20) est pourvue d'une cannelure extérieure (22) ; et
le manchon extérieur (40) est manchonné à l'extérieur de l'essieu (10), une circonférence intérieure du manchon extérieur (40) est pourvue d'un second chemin de roulement (41) correspondant au premier chemin de roulement (13), le second chemin de roulement (41) est pourvu d'un trou de montage d'élément de roulement et en ajustement par encliquetage avec le premier chemin de roulement (13) pour former un espace de roulement dans lequel un élément de roulement apparié avec celui-ci est monté via le trou de montage d'élément de roulement, de telle sorte que le manchon extérieur (40) est connecté de manière rotative à l'extérieur de l'essieu (10), et une cannelure intérieure appariée à la cannelure extérieure (22) sur le manchon d'essieu (20) est prévue sur les deux côtés axiaux du second chemin de roulement (41) à l'intérieur du manchon extérieur (40) et située à des distances prédéterminées du second chemin de roulement (41).

10. Essieu monté à écartement variable selon la revendication 9, comprenant en outre une bague collectrice de verrouillage (60), un axe d'appui (80), une pièce élastique et une tige d'appui (90) ;
dans lequel la bague collectrice de verrouillage (60) est manchonnée de manière coulissante au niveau de la cannelure extérieure (11) de l'essieu (10), et la bague collectrice de verrouillage (60) est pourvue en son sein d'une cannelure intérieure appariée à la cannelure extérieure de l'essieu (10), et pourvue à l'extérieur d'une cannelure extérieure appariée à la cannelure intérieure du manchon extérieur ; une paroi intérieure de la bague collectrice de verrouillage (60) est pourvue radialement d'une paire de fentes ouvertes présentant des ouvertures communiquant avec une extrémité de la bague collectrice de verrouillage (60) ; l'axe d'appui (80) passe à travers le trou oblong, et les deux extrémités de l'axe d'appui font saillie à partir du trou oblong (12) et les deux extrémités de l'axe d'appui (80) faisant saillie à partir du trou oblong sont encastrées à l'intérieur de la paire de fentes ouvertes par l'ouverture des fentes ouvertes (12) ; la pièce élastique de verrouillage est manchonnée sur l'essieu (10), présentant une extrémité mise en butée contre une paroi extérieure du premier chemin de roulement (13), et l'autre extrémité mise en butée contre une extrémité de la bague collectrice de verrouillage (60) éloignée de la fente ouverte ; et lorsque la pièce élastique de verrouillage est dans un état naturel, la cannelure extérieure de la bague collectrice de verrouillage (60) est au moins partiellement située dans la cannelure intérieure d'un côté correspondant du manchon extérieur (40) pour verrouiller la rotation du manchon extérieur (40) ; et
la tige d'appui (90) présente une extrémité pénétrant à travers le passage traversant central de l'essieu (10) et mise en butée contre un côté de l'axe d'appui (80) sur lequel la fente ouverte est située, et l'autre extrémité s'étendant jusqu'à une partie d'extrémité de l'essieu (10).

11. Essieu monté à écartement variable selon la revendication 10, comprenant en outre un mécanisme de déverrouillage (100) monté sur une extrémité de l'essieu (10) où la tige d'appui (90) est située ; et
un corps de boîte d'essieu (50) est monté à chaque extrémité de l'essieu (10) situé à l'extérieur de la paire de roues, et le mécanisme de déverrouillage (100) comprend une base de montage et une tête de poussée pénétrant axialement à travers la base de montage ; la base de montage est montée de manière fixe à l'extérieur du corps de boîte d'essieu (50) et la tête de poussée est disposée à l'opposé de la tige d'appui (90).

12. Essieu à écartement variable selon la revendication 10, dans lequel le second filet non autobloquant (21) présente une longueur supérieure à la longueur du premier filet non autobloquant (14) et égale à la moitié de l'écartement à modifier ;
une circonférence intérieure du manchon extérieur (40) est pourvue d'un bossage annulaire au niveau du second chemin de roulement (41), et après que le manchon extérieur (40) soit connecté à l'essieu (10), une paire d'espaces de montage pour les manchons d'essieu (20) est formée entre le manchon extérieur (40) et l'essieu (10) au niveau des deux côtés axiaux de l'espace de roulement ; et
la pièce élastique est un ressort d'arrêt (70).
